# EUROPÄISCHE PATENTSCHRIFT

(11) **EP 1 775 171 B1**
(45) Veröffentlichungstag und Bekanntmachung des Hinweises auf die Patenterteilung: **23.03.2011**
(21) Anmeldenummer: 06021477.2
(22) Anmeldetag: 13.10.2006
(51) Int. Cl.: B60R 16/037, B60K 35/00, B60K 37/06

(54) **Kraftfahrzeug mit beleuchtbaren Bedienelementen**
Motor vehicle with illuminable operating element
Véhicule automobile avec élément de commande éclairé

(30) Priorität: 15.10.2005 DE 102005049386
(43) Veröffentlichungstag der Anmeldung: 18.04.2007
(73) Patentinhaber: GM Global Technology Operations, Inc., Detroit, MI 48265-3000 (US)
(72) Erfinder: Bald, Heiko, 64397 Modautal (DE); Böhme, Aiko, 55218 Ingelheim (DE)
(74) Vertreter: Daniel, Ulrich W.P.

(56) Entgegenhaltungen:
- EP-A1- 0 675 018
- EP-A2- 1 127 748
- WO-A-98/28649
- DE-A1- 10 220 797

## Beschreibung

Die Erfindung bezieht sich auf ein Kraftfahrzeug mit beleuchtbaren Bedienelementen zur Steuerung verschiedener Funktionen des Kraftfahrzeugs und mit einem Sprachsteuerungssystem zur akustischen Steuerung dieser Funktionen.

Die vielfältigen Funktionen eines Kraftfahrzeugs, wie beispielsweise die Beleuchtungsanlage, eine Klima- und Belüftungsanlage, ein Audiosystem sowie gegebenenfalls ein Bordcomputer, werden mit unterschiedlichen Bedienelementen von einem Nutzer des Kraftfahrzeugs gesteuert. Hierzu sind die Bedienelemente in einem Armaturenbrett des Kraftfahrzeugs insbesondere derart angeordnet, dass sie von einem Fahrer ohne allzu große Ablenkung vom umgebenden Verkehrsgeschehen eingesehen und bedient werden können. Als Bedienelemente werden unter anderem Druckknöpfe, Dreh- und Kippschalter, Stellräder und dergleichen verwendet.

Um die einzelnen Bedienelemente auch bei Dunkelheit und ausgeschalteter Innenbeleuchtung in einfacher Weise auffinden und betätigen zu können ist es bekannt, die Bedienelemente beleuchtbar auszuführen. Hierzu sind beispielsweise in einem Kippschalter Leuchtmittel, wie eine LED, angeordnet, wobei der Kippschalter mit einem seiner Funktion entsprechenden Symbol gekennzeichnet ist, das von dem von dem Leuchtmittel ausgehenden Licht durchschienen ist. Somit kann der Nutzer, wenn er auf das Bedienelement schaut, anhand des Symbols feststellen, um welches konkrete Bedienelement es sich handelt und dieses in gewünschter Weise betätigen.

Weiterhin ist es bekannt, insbesondere höherwertige Kraftfahrzeuge mit einem Sprachsteuerungssystem auszustatten, das auf gesprochene Anweisungen eines Nutzers reagiert. Beispielsweise kann der Nutzer die Anweisung "Klimaanlage 20 Grad" sprechen. Diese Anweisung wird vom Sprachsteuerungssystem erfasst und in an sich bekannter Weise verarbeitet und dementsprechend die Klimaanlage auf eine Innenraumtemperatur von 20° C eingeregelt.

Die DE 195 31 415 A1 offenbart eine Einrichtung zur Eingabe, Übertragung und Speicherung von Informationen für ein Kraftfahrzeug, wobei mit Hilfe eines Spracheingabesystems Daten eingegeben und drahtlos, beispielsweise an einen externen PC, übertragen werden können.

Die EP 1 083 479 A1 beschreibt ein Verfahren zum Betrieb einer sprachgesteuerten Befehlseingabeeinheit in einem Kraftfahrzeug, bei dem mit Hilfe von vorgegebenen Abkürzungen, die von einem Nutzer gesprochen werden, ein Wechsel in einen anderen Betriebsmodus ermöglicht wird.

Im Weiteren zeigt die DE 196 08 869 A1 ein Bediensystem insbesondere für Komponenten in einem Kraftfahrzeug, wobei mit Hilfe eines Sprachsteuerungssystems verschiedene Funktionen des Kraftfahrzeugs gesteuert werden können.

Darüber hinaus ist der DE 100 37 023 A1 ein Verfahren und ein System zur akustischen Funktionssteuerung im Kraftfahrzeug zu entnehmen. Hierbei werden verschiedene Funktionen des Kraftfahrzeugs über ein Sprachsteuerungssystem gesteuert. Die jeweils zu einzelnen Funktionalitäten zugehörigen Bedienelemente, beispielsweise die Bedienelemente zur Steuerung einer Klimaanlage, werden, nachdem diese Funktionalität durch das Sprachsteuerungssystem aktiviert worden ist, mechanisch ausgelenkt, um einem Nutzer, der einen Finger auf dieses Bedienelement legt, anzuzeigen, dass diese Funktionalität bereits durch das Sprachsteuerungssystem aktiviert worden ist. Dies erfordert jedoch einen hohen konstruktiven Aufwand.

Die bekannten Bedienelemente sind insofern nachteilig, als aufgrund der Vielzahl verschiedener Funktionen in modernen Kraftfahrzeugen und trotz einer logischen Anordnung der Bedienelemente im Armaturenbrett es besonders bei Dunkelheit nicht auszuschließen ist, dass ein Nutzer ein spezielles Bedienelement längere Zeit suchen muss, bis er es gefunden hat.

Schließlich zeigt die EP 0 675 018 A1 eine Informationsvorrichtung für bedienbare Geräte von Kraftfahrzeugen mit einem Bildschirm und einer Auswahleinrichtung für verschiedene Betriebsarten der Bildschirmanzeige. In einer speziellen Betriebsart ("Bedienerinformation") steuern den Geräten individuell zugeordnete Bedienelemente bei ihrer Betätigung eine Steuervorrichtung für einen Speicher an, die daraus den Bedienelementen zugeordnete Daten entnimmt und zur Anzeige auf dem Bildschirm bringt. Die Bedienelemente können während der Betriebsart optisch hervorgehoben sein. Im Weiteren kann eine akustische Information über das Bedienelement ausgegeben werden.

Es ist Aufgabe der Erfindung ein Kraftfahrzeug der eingangs genannten Art zu schaffen, dessen Nutzungskomfort verbessert und damit die Verkehrssicherheit erhöht ist.

Die EP 1 127 748 offenbart eine Vorrichtung gemäß dem Oberbegriff des ersten Anspruchs.

Erfindungsgemäß wird die Aufgabe dadurch gelöst, dass bei Aktivierung spezieller Fahrzeugfunktionalitäten über das Sprachsteuerungssystem die entsprechend zu diesen Funktionalitäten gehörenden Bedienelemente optisch hervorhebbar sind.

Der Kerngedanke der Erfindung besteht darin: Ein Kraftfahrzeug verfügt in an sich bekannter Weise über verschiedene beleuchtbare Bedienelemente, um alle Funktionen des Kraftfahrzeugs steuern zu können. Diese Bedienelemente sind über das Armaturenbrett des Kraftfahrzeugs verteilt angeordnet. Zusätzlich verfügt das Kraftfahrzeug über ein Sprachsteuerungssystem, mit dem verschiedene Funktionalitäten, wie eine Klima- und Belüftungsanlage oder eine Audioanlage, angesteuert werden können. Wird nunmehr von einem Nutzer über das Sprachsteuerungssystem eine entsprechende Anweisung ausgegeben, so werden die zugehörigen Bedienelemente im Armaturenbrett optisch hervorgehoben, um diese speziell ausgewählten Bedienelemente von den anderen Bedienelementen, deren Funktionalitäten durch das Sprachsteuerungssystem nicht aktiviert worden sind, optisch deutlich abzugrenzen. Dabei erfolgt diese optische Hervorhebung bevorzugt wie im Folgenden beschrieben.

Der Vorteil der Erfindung liegt darin, dass das optische Hervorheben der beleuchtbaren Bedienelemente von einem zentralen Steuergerät des Kraftfahrzeugs in einfacher Weise durchgeführt werden kann, da dieses Steuergerät bereits mit den Bedienelementen, den damit zu steuernden Einrichtungen sowie dem Sprachsteuerungssystem in Verbindung steht. Die entsprechende hard- und/oder softwaremäßige Auslegung des Steuergeräts ist dem Fachmann möglich.

Durch diese optische Hervorhebung kann ein Nutzer, insbesondere bei Dunkelheit, die zugehörigen Bedienelemente in einfacher Weise auffinden, ohne hierbei übermäßig vom Verkehrsgeschehen abgelenkt zu werden, und gegebenenfalls weitere Steuerungen mit Hilfe der Bedienelemente vornehmen. Beispielsweise kann er durch die gesprochene Anweisung "Klimaanlage 20 Grad" die Innenraumtemperatur in gewünschter Weise ändern. Dabei werden alle zur Klima- und Belüftungsanlage gehörenden Bedienelemente optisch hervorgehoben, so dass der Nutzer beispielsweise einen Schalter zur Veränderung der Luftverteilung im Innenraum leicht auffinden und in gewünschter Weise betätigen kann.

Bevorzugt kann das optische Hervorheben durch ein helleres Aufleuchten der Leuchtmittel der Bedienelemente erfolgen. Somit sind diese heller aufleuchtenden Bedienelemente deutlich von den anderen Bedienelementen unterscheidbar. In gleicher Weise kann das optische Hervorheben durch ein Blinken oder Blitzen der Bedienelemente bzw. von deren Leuchtmitteln erfolgen oder über einen Farbwechsel. Hierzu können den Bedienelementen jeweils Leuchtmittel unterschiedlicher Farbe zugeordnet werden, um diese im Normalbetrieb weiß zu beleuchten und nach einer Aktivierung durch das Sprachsteuerungssystem beispielsweise rot.

Zweckmäßigerweise wird entweder nur ein einzelnes Bedienelement optisch hervorgehoben oder eine zusammengehörende Gruppe von Bedienelementen. Eine solche Gruppe kann beispielsweise aus allen Bedienelementen der Klima- und Belüftungsanlage oder der Audioanlage gebildet sein. Nachdem ein Nutzer die Anweisung "Radio an" ausgegeben hat, werden sonach alle Bedienelemente der Audioanlage, z.B. rot, beleuchtet.

Es versteht sich, dass die vorstehend genannten Merkmale nicht nur in der jeweils angegebenen Kombination, sondern auch in anderen Kombinationen verwendbar sind. Der Rahmen der Erfindung ist nur durch die Ansprüche definiert.

## Patentansprüche

1. Kraftfahrzeug mit beleuchtbaren Bedienelementen zur Steuerung verschiedener Funktionen des Kraftfahrzeugs und mit einem Sprachsteuerungssystem zur akustischen Steuerung dieser Funktionen, **dadurch gekennzeichnet, dass** bei Aktivierung spezieller Fahrzeugfunktionalitäten über das Sprachsteuerungssystem die entsprechend zu diesen Funktionalitäten gehörenden Bedienelemente optisch hervorhebbar sind.

2. Kraftfahrzeug nach Anspruch 1, **dadurch gekennzeichnet, dass** die Bedienelemente heller beleuchtbar und/oder blinkend beleuchtbar sind und/oder mit einer anderen Farbe.

3. Kraftfahrzeug nach Anspruch 1 oder 2, **dadurch gekennzeichnet, dass** nur ein einzelnes Bedienelement oder eine zusammengehörende Gruppe von Bedienelementen gemeinsam optisch hervorhebbar ist.

## Claims

1. A motor vehicle, comprising control elements that can be illuminated for the control of various functions of the motor vehicle and a voice-control system for acoustically controlling such functions, **characterized in that** upon activating special vehicle functionalities via the voice-control system the control elements accordingly belonging to such functionalities can visually be emphasized.

2. A motor vehicle according to claim 1, **characterized in that** the control elements can be illuminated more brightly and/or be illuminated in a blinking fashion and/or with another colour.

3. A motor vehicle according to claim 1 or 2, **characterized in that** only one single control element or a combined group of control elements together can be visually emphasized.

## Revendications

1. Véhicule à moteur avec des éléments de commandes pouvant être éclairés pour la commande de différentes fonctions du véhicule à moteur et avec un système de commande vocale pour la commande acoustique de ces fonctions, **caractérisé en ce que** lors de l'activation de fonctionnalités spéciales du véhicule par le système de commande vocale, les éléments de commande associés à ces fonctionnalités peuvent être mis visuellement en évidence.

2. Véhicule à moteur selon la revendication 1, **caractérisé en ce que** les éléments de commande peuvent être plus vivement éclairés et/ou éclairés en clignotant et/ou d'une autre couleur.

3. Véhicule à moteur selon la revendication 1 ou 2, **caractérisé en ce qu'**un seul élément de commande isolé ou groupe d'éléments de commande associés peut être mis visuellement en évidence à la fois.
